# EUROPEAN PATENT SPECIFICATION

(11) **EP 4 376 383 B1**
(45) Date of publication and mention of the grant of the patent: **16.10.2024**
(21) Application number: 22209480.7
(22) Date of filing: 24.11.2022
(51) Int. Cl.: H04L 65/1016, H04L 65/1063, H04L 65/1069, H04L 65/1104, H04L 47/74, H04L 47/80, H04W 76/18, H04L 47/70

(54) **FRIENDLY OPERATION OF AN IP MULTIMEDIA SUBSYSTEM OF A COMMUNICATION NETWORK**
FREUNDLICHER BETRIEB EINES IP-MULTIMEDIA-SUBSYSTEMS EINES KOMMUNIKATIONSNETZWERKS
FONCTIONNEMENT CONVIVIAL D'UN SOUS-SYSTÈME MULTIMÉDIA IP D'UN RÉSEAU DE COMMUNICATION

(43) Date of publication of application: 29.05.2024
(73) Proprietor: Deutsche Telekom AG, 53113 Bonn (DE)
(72) Inventor: SCHOTT, Roland, 61231 Bad Nauheim (DE); BOUSSOUAB, Taoufik, 65929 Frankfurt (DE); JESSKE, Roland, 69514 Laudenbach (DE)
(74) Representative: RDL Patentanwälte PartG mbB

(56) References cited:
- EP-A1- 2 080 343
- EP-A1- 2 109 264
- EP-B1- 2 080 343
- US-B2- 9 282 444

## Description

The invention relates to a method for operating an internet protocol, IP, multimedia subsystem, IMS, of a communication network, wherein a stateless application server, AS, of an IMS of a communication network receives a communication request from a terminal device relayed by a network entity of the IMS; the stateless AS provides the terminal device with a requested communication connection and increases a current value of a central concurrent calls counter associated with the terminal device and stored by a database of the communication network when the current value of the central concurrent calls counter is smaller than a maximum number of simultaneous communications allowed for the terminal device by the communication network. The invention further relates to a stateless AS for an IMS of a communication network, an IMS for a communication network and a computer program product.

EP 2109264 A1 discloses a method for operating a multimedia gateway wherein at least one admission control parameter is defined and requests concerning pinholes between IP realms are admitted or rejected depending on the at least one admission control parameter.

EP 2080343 A0, i.e., WO 2008/055541 A1, discloses a method for operating a communication network having a signalling layer and a bearer layer, i.e., connectivity layer. A control server creates control rules for a current bearer dependent on service requirements received from the signalling layer and capabilities received from a terminal device i.e., user equipment.

US 9,282,444 B2 discloses a method for enabling a Session Initiation Protocol, SIP, communication waiting function in a communication network that supports both a circuit switching domain and a packet switching domain of the communication network.

A communication network usually allows a respective maximum number of simultaneous communication connections for each terminal device, i.e., user equipment (UE). Each communication connection is provided by a stateless AS of an IMS of the communication network. The stateless AS receives a communication request of a terminal device and provides the terminal device with a requested communication connection when a current number of allowed simultaneous communication connections provided for the terminal device including the requested communication connection does not exceed the allowed maximum number. Otherwise, the stateless AS declines the requested communication connection.

The current number of allowed simultaneous communication connections is centrally stored by the database and accessed by the stateless AS. The current number is implemented as a value of the central concurrent calls counter. The stateless AS increases the current number for each provided communication connection and decreases the current number for each terminated communication connection. Thus, the central concurrent calls counter keeps track of the allowed simultaneous communication connections of the terminal device.

However, communication connections of the terminal device may terminate abnormally preventing the stateless AS from decreasing the value of the central concurrent calls counter. As a consequence, the stateless AS wrongly declines a communication request of the terminal device when the central concurrent calls counter equals the maximum number of allowed simultaneous communication connections.

Therefore, it is an object of the invention to suggest a method for operating an IP multimedia subsystem of a communication network which does not wrongly decline a communication request of a terminal device. Another object of the invention is providing a stateless AS for an IMS of a communication network, an IMS for a communication network and a computer program product.

An aspect of the invention is a method for operating an IP multimedia subsystem, IMS, of a communication network, wherein a stateless application server, AS, of an IMS of a communication network receives a communication request from a terminal device relayed by a network entity of the IMS; the stateless AS provides the terminal device with a requested communication connection and increases a current value of a central concurrent calls counter associated with the terminal device and stored by a database of the communication network when the current value of the central concurrent calls counter is smaller than a maximum number of simultaneous communications allowed for the terminal device by the communication network. The communication request and the communication connection of the terminal device is relayed by the network entity to the stateless AS. The stateless AS ensures that the terminal device is provided with simultaneous communication connections until the maximum number of simultaneous communication connections has been reached.

The communication network may be a fixed-line network or a cellular network. The concurrent calls counter may be a generic connection admission control, GCAC, counter. The database may be a user profile database or a network data layer, NDL.

According to the invention, the stateless AS provides the terminal device with the requested communication connection when the current value of the central concurrent calls counter equals the defined maximum number and another network entity of the IMS having previously relayed a communication connection for the terminal device, upon an alive request of the stateless AS, confirms a termination of the previously relayed communication connection. In other words, the stateless AS checks a status of a previous communication connection previously relayed by another network entity. The status is checked by means of the alive request.

The communication request can be accepted despite the current value of the central concurrent calls counter equaling the maximum number of simultaneous connections when the previous communication connection has been abnormally terminated, i.e. without the knowledge of the stateless AS and without decreasing the current value of the central concurrent calls counter.

Confirming may comprise not answering the alive request. The alive request triggers an answer of the other network entity. The other network entity does not answer when the previously relayed communication connection has been terminated.

Preferably, the stateless AS declines the requested communication connection when the current value of the central concurrent calls counter equals the defined maximum number and the other network entity, upon the request of the stateless AS, negates the termination of the previously relayed communication connection. The communication request cannot be accepted when the previous communication connection keeps on being used by the terminal device.

Negating may comprise answering the alive request. The other network entity answers the alive request when the previously relayed communication connection is still in use.

The stateless AS advantageously transmits a session initiation protocol, SIP, options request to the other network entity as the alive request. The SIP is specified by RFC 3261 and defines a plurality of requests comprising the options request.

The other network entity may confirm the termination of the previously relayed communication connection when the previously relayed communication connection was aborted without receiving a SIP bye request from the terminal device. The SIP bye request normally terminates the communication connection. A missing SIP bye request indicates an abort of the communication connection, i.e. an abnormal termination.

In an embodiment, the terminal device requests a VoIP call connection as the communication connection. VoIP calls are common communication connections provided by the IMS and are used for telephone calls executed by means of the terminal device. The terminal device may be configured as a stationary terminal device or as a mobile terminal device, e.g., a smartphone, a tablet, a smartwatch and the like.

A first proxy call session control function, P-CSCF, of the network entity may relay the communication request. A second P-CSCF of the other network entity may confirm or negate the termination of the previously relayed communication connection. Thus, a sudden change of the P-CSCF due to a physical movement of the terminal device or due to a P-CSCF redundancy does not result in wrongly declining the communication request of the terminal device.

Another aspect of the invention is a stateless AS for an IMS of a communication network. The stateless AS provides a terminal device with a communication connection.

According to the invention, the stateless AS is configured for carrying out a method according to one of the preceding claims. The stateless AS does not wrongly decline communication requests of the terminal device.

A third aspect of the invention is an IMS for a communication network, comprising a stateless AS. The IMS controls communication connections of terminal devices.

According to the invention, the IMS comprises a stateless AS according to an embodiment of the invention. The IMS friendly controls the communication connections.

A fourth aspect of the invention is a computer program product, comprising a storage medium storing a program code. The storage medium may be configured as a CD (compact disc), a DVD (digital versatile disk), a USB (universal serial bus) stick, a hard drive, a RAM (random access memory) chip, a cloud storage and the like.

According to the invention, the program code causing a computing device to carry out a method according to an embodiment of the invention as a stateless AS of an IMS when being executed by a processor of the computing device. The computer program product implements an inventive AS.

An essential advantage of the inventive method is that the IP multimedia subsystem of a communication network does not wrongly decline a communication request of a terminal device. As a consequence, a customer's satisfaction in using the terminal device is increased.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

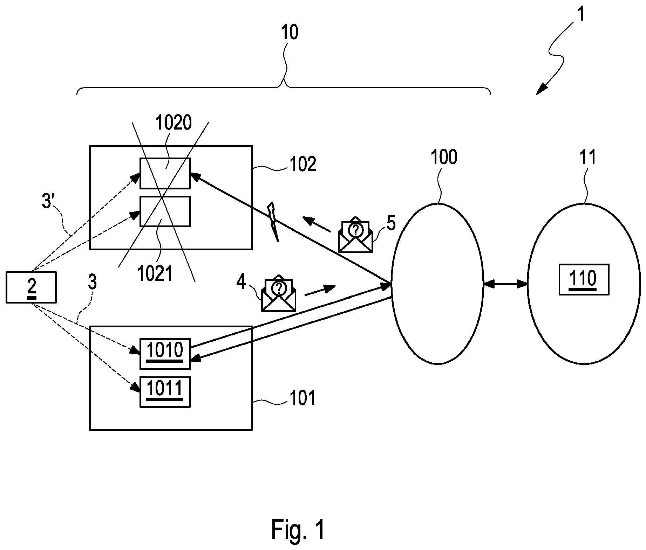

- Fig. 1: schematically shows an entity diagram of an IMS according to an embodiment of the invention for a communication network.

Fig. 1 schematically shows an entity diagram of an IP multimedia subsystem, IMS, 10 according to an embodiment of the invention for a communication network 1. The communication network may be a fixed-line network or a cellular network.

The IMS 10 comprises a stateless application server, AS, 100 according to an embodiment of the invention for the IMS 10. The IMS 10 may additionally comprise a network entity 101 and another network entity 102. The network entity 101 may comprise a first proxy call session control function, P-CSCF, 1010 and a first access border function 1011. The other network entity 102 may comprise a second P-CSCF 1020 and a second access border function 1021.

The stateless AS 100 is configured for carrying out a method according to an embodiment of the invention as described below. The stateless AS 100 may be implemented by means of a computer program product comprising a storage medium storing a program code. The program code causes a computing device to carry out the following method according to an embodiment of the invention as the stateless AS 100 of the IMS of the communication network when being executed by a processor of the computing device.

The method is applied for operating the IMS 10 of the communication network 1. The stateless AS 100 of the IMS 10 of the communication network 1 receives a communication request 4 from a terminal device 2. The terminal device 2 may be configured as a stationary terminal device or as a mobile terminal device, e.g., a smartphone, a tablet, a smartwatch and the like.

The terminal device 2 may request a VoIP call connection as the communication connection. The communication request 4 is relayed by a network entity 101 of the IMS 10. The first P-CSCF 1010 of the network entity 101 may relay the communication request 4.

The stateless AS 100 provides the terminal device 2 with a requested communication connection 3 and increases a current value of a central concurrent calls counter 110 associated with the terminal device 2 and stored by a database 11 of the communication network 1 when the current value of the central concurrent calls counter 110 is smaller than a maximum number of simultaneous communications allowed for the terminal device 2 by the communication network 1. The concurrent calls counter may be a generic connection admission control, GCAC, counter. The database may be a user profile database or a network data layer, NDL.

The stateless AS 100 also provides the terminal device 2 with the requested communication connection 3 when the current value of the central concurrent calls counter 110 equals the defined maximum number and another network entity 102 of the IMS 10 having previously relayed a communication connection 3' for the terminal device 2, upon an alive request 5 of the stateless AS 100, confirms a termination of the previously relayed communication connection 3'. Confirming may comprise not answering the alive request 5.

The stateless AS 100 may alternatively decline the requested communication connection 3 when the current value of the central concurrent calls counter 110 equals the defined maximum number and the other network entity 102, upon the alive request 5 of the stateless AS 100, negates the termination of the previously relayed communication connection 3'. Negating may comprise answering the alive request 5.

The stateless AS 100 preferably transmits a session initiation protocol, SIP, options request to the other network entity 102 as the alive request 5. The second P-CSCF 1020 of the other network entity 102 may confirm or negate the termination of the previously relayed communication connection 3'.

Particularly, the other network entity 102 confirms the termination of the previously relayed communication connection 3' when the previously relayed communication connection 3' was aborted without receiving a SIP bye request from the terminal device 2.

### Reference Numerals

- 1: communication network
- 10: IP multimedia subsystem
- 100: stateless application server
- 101: network entity
- 1010: first proxy call session control function
- 1011: first access border function
- 102: other network entity
- 1020: second proxy call session control function
- 1021: second access border function
- 11: database
- 110: central concurrent calls counter
- 2: terminal device
- 3: communication connection
- 3': previously relayed communication connection
- 4: communication request
- 5: alive request

## Claims

1. A method for operating an IP multimedia subsystem, IMS, (10) of a communication network (1), wherein
- a stateless application server, AS, (100) of an IMS (10) of a communication network (1) receives a communication request (4) from a terminal device (2) relayed by a communication network entity (101) of the IMS (10);
- the stateless AS (100) provides the terminal device (2) with a requested communication connection (3) and increases a current value of a central concurrent calls counter (110) associated with the terminal device (2) and stored by a database (11) of the communication network (1) when the current value of the central concurrent calls counter (110) is smaller than a maximum number of simultaneous communications allowed for the terminal device (2) by the communication network (1);
- the stateless AS (100) provides the terminal device (2) with the requested communication connection (3) when the current value of the central concurrent calls counter (110) equals the defined maximum number and another network entity (102) of the IMS (10) having previously relayed a communication connection (3') for the terminal device (2), upon an alive request (5) of the stateless AS (100), confirms a termination of the previously relayed communication connection (3').

2. The method according to claim 1, wherein confirming comprises not answering the alive request (5).

3. The method according to claim 1 or 2, wherein the stateless AS (100) declines the requested communication connection (3) when the current value of the central concurrent calls counter (110) equals the defined maximum number and the other network entity (102), upon the alive request (5) of the stateless AS (100), negates the termination of the previously relayed communication connection (3').

4. The method accoring to claim 3, wherein negating comprises answering the alive request (5).

5. The method according to one of claims 1 to 4, wherein the stateless AS (100) transmits a session initiation protocol, SIP, options request to the other network entity (102) as the alive request (5).

6. The method according to one of claims 1 to 5, wherein the other network entity (102) confirms the termination of the previously relayed communication connection (3') when the previously relayed communication connection (3') was aborted without receiving a SIP bye request from the terminal device (2).

7. The method according to one of claims 1 to 6, wherein the terminal device (2) requests a VoIP call connection as the communication connection.

8. The method according to one claims 1 to 7, wherein a first proxy call session control function, P-CSCF, (1010) of the network entity (101) relays the communication request (4).

9. The method according to one of claims 1 to 8, wherein a second P-CSCF (1020) of the other network entity (102) confirms or negates the termination of the previously relayed communication connection (3').

10. A stateless AS (100) for an IMS (10) of a communication network (1), configured for carrying out a method according to one of the preceding claims.

11. An IMS (10) for a communication network (1), comprising a stateless AS (100) according to claim 10.

12. A computer program product, comprising a storage medium storing a program code, the program code causing a computing device to carry out a method according to one of claims 1 to 9 as a stateless application server, AS, (100) of an IP multimedia supbsystem, IMS, (10) of a communication network (1) when being executed by a processor of the computing device.

## Patentansprüche

1. Verfahren zum Betreiben eines IP-Multimedia-Subsystems IMS (10) eines Kommunikationsnetzwerks (1), wobei
- ein zustandsloser Anwendungsserver AS (100) eines IMS (10) eines Kommunikationsnetzwerks (1) eine Kommunikationsanfrage (4) von einem Endgerät (2) empfängt, die von einer Kommunikationsnetzwerk-Einheit (101) des IMS (10) weitergeleitet wurde;
- der zustandslose AS (100) dem Endgerät (2) eine angeforderte Kommunikationsverbindung (3) bereitstellt und einen aktuellen Wert eines zentralen Zählers gleichzeitiger Aufrufe (110), der dem Endgerät (2) zugeordnet ist und von einer Datenbank (11) des Kommunikationsnetzwerks (1) gespeichert wird, erhöht, wenn der aktuelle Wert des zentralen Zählers gleichzeitiger Aufrufe (110) kleiner als eine Höchstzahl simultaner Kommunikationen ist, die das Kommunikationsnetzwerk (1) für das Endgerät (2) erlaubt;
- der zustandslose AS (100) dem Endgerät (2) die angeforderte Kommunikationsverbindung (3) bereitstellt, wenn der aktuelle Wert des zentralen Zählers gleichzeitiger Aufrufe (110) der definierten Höchstzahl entspricht und eine andere Netzwerkeinheit (102) des IMS (10), die zuvor eine Kommunikationsverbindung (3') für das Endgerät (2) weitergeleitet hat, nach einer Alive-Anfrage (5) des zustandslosen AS (100) eine Beendigung der zuvor weitergeleiteten Kommunikationsverbindung (3') bestätigt.

2. Verfahren nach Patentanspruch 1, wobei die Bestätigung das Nicht-Beantworten der Alive-Anfrage (5) umfasst.

3. Verfahren nach Patentanspruch 1 oder 2, wobei der zustandslose AS (100) die angeforderte Kommunikationsverbindung (3) ablehnt, wenn der aktuelle Wert des
zentralen Zählers gleichzeitiger Aufrufe (110) der definierten Höchstzahl entspricht, und die andere Netzwerkeinheit (102) nach der Alive-Anfrage (5) des zustandslosen AS (100) die Beendigung der zuvor weitergeleiteten Kommunikationsverbindung (3') negiert.

4. Verfahren nach Patentanspruch 3, wobei die Negierung das Beantworten der Alive-Anfrage (5) umfasst.

5. Verfahren nach einem der Patentansprüche 1 bis 4, wobei der zustandslose AS (100) eine Sitzungsinitiierungsprotokoll-(SIP-)OPTIONS-Anfrage an die andere Netzwerkeinheit (102) als Alive-Anfrage (5) überträgt.

6. Verfahren nach einem der Patentansprüche 1 bis 5, wobei die andere Netzwerkeinheit (102) die Beendigung der zuvor weitergeleiteten Kommunikationsverbindung (3') bestätigt, wenn die zuvor weitergeleitete Kommunikationsverbindung (3') abgebrochen wurde, ohne dass eine SIP-BYE-Anfrage vom Endgerät (2) empfangen wurde.

7. Verfahren nach einem der Patentansprüche 1 bis 6, wobei das Endgerät (2) eine VolP-Anrufverbindung als Kommunikationsverbindung anfordert.

8. Verfahren nach einem der Patentansprüche 1 bis 7, wobei eine erste Proxy Call Session Control Function P-CSCF (1010) der Netzwerkeinheit (101) die Kommunikationsanfrage (4) weiterleitet.

9. Verfahren nach einem der Patentansprüche 1 bis 8, wobei eine zweite P-CSCF (1020) der anderen Netzwerkeinheit (102) die Beendigung der zuvor weitergeleiteten Kommunikationsverbindung (3') bestätigt oder negiert.

10. Zustandsloser AS (100) für ein IMS (10) eines Kommunikationsnetzwerks (1), der für die Ausführung eines Verfahrens nach einem der vorangegangenen Patentansprüche konfiguriert ist.

11. IMS (10) für ein Kommunikationsnetzwerk (1), das einen zustandslosen AS (100) nach Patentanspruch 10 umfasst.

12. Computerprogrammprodukt, das ein Speichermedium umfasst, das einen Programmcode speichert, wobei der Programmcode eine Rechenvorrichtung veranlasst, ein Verfahren nach einem der Patentansprüche 1 bis 9 als zustandsloser Anwendungsserver AS (100) eines IP-Multimedia-Subsystems IMS (10) eines Kommunikationsnetzwerks (1) durchzuführen, wenn er von einem Prozessor der Rechenvorrichtung ausgeführt wird.

## Revendications

1. Procédé permettant de faire fonctionner un sous-système multimédia IP (IMS) (10) d'un réseau de communication (1), dans lequel
- un serveur d'applications (AS) sans état (100) d'un IMS (10) d'un réseau de communication (1) reçoit une demande de communication (4) d'un dispositif terminal (2) relayée par une entité de réseau de communication (101) de l'IMS (10) ;
- le AS sans état (100) fournit au dispositif terminal (2) une connexion de communication (3) demandée et augmente une valeur actuelle d'un compteur central d'appels simultanés (110) associé au dispositif terminal (2) et stocké dans une base de données (11) du réseau de communication (1), lorsque la valeur actuelle du compteur central d'appels simultanés (110) est inférieure à un nombre maximal de communications simultanées autorisées pour le dispositif terminal (2) par le réseau de communication (1) ;
- le AS sans état (100) fournit au dispositif terminal (2) la connexion de communication (3) demandée lorsque la valeur actuelle du compteur central d'appels simultanés (110) est égale au nombre maximal défini et qu'une autre entité de réseau (102) de l'IMS (10) ayant précédemment relayé une connexion de communication (3') au dispositif terminal (2) confirme, sur demande active (5) du AS sans état (100), la cessation de la connexion de communication précédemment relayée (3').

2. Procédé selon la revendication 1, dans lequel la confirmation comprend une absence de réponse à la demande active (5).

3. Procédé selon la revendication 1 ou 2, dans lequel le AS sans état (100) décline la connexion de communication (3) demandée lorsque la valeur actuelle du compteur central d'appels simultanés (110) est égale au nombre maximal défini et que l'autre entité de réseau (102) annule, sur demande active (5) du AS sans état (100), la cessation de la connexion de communication précédemment relayée (3').

4. Procédé selon la revendication 3, dans lequel le rejet comprend une réponse à la demande active (5).

5. Procédé selon l'une des revendications 1 à 4, dans lequel le AS sans état (100) transmet à l'autre entité de réseau (102) une demande de protocole d'initiation de session (SIP) OPTIONS à titre de la demande active (5).

6. Procédé selon l'une des revendications 1 à 5, dans lequel l'autre entité de réseau (102) confirme la cessation de la connexion de communication précédemment relayée (3') lorsque la connexion de communication précédemment relayée (3') a été interrompue sans avoir reçu une demande SIP BYE du dispositif terminal (2).

7. Procédé selon l'une des revendications 1 à 6, dans lequel le dispositif terminal (2) demande une connexion d'appel VoIP à titre de connexion de communication demandée.

8. Procédé selon l'une des revendications 1 à 7, dans lequel une première fonction de contrôle de session d'appel proxy (P-CSCF) (1010) de l'entité de réseau (101) relaie la demande de communication (4).

9. Procédé selon l'une des revendications 1 à 8, dans lequel une seconde P-CSCF (1020) de l'autre entité de réseau (102) confirme ou rejette la cessation de la connexion de communication précédemment relayée (3').

10. AS sans état (100) pour un IMS (10) d'un réseau de communication (1), configuré pour mettre en oeuvre un procédé selon l'une des revendications précédentes.

11. IMS (10) pour un réseau de communication (1), comprenant un AS sans état (100) selon la revendication 10.

12. Produit de programme informatique, comprenant un support de stockage stockant un code de programme, le code de programme amenant un dispositif informatique à mettre en oeuvre un procédé selon l'une des revendications 1 à 9 sous la forme d'un AS sans état (AS) (100) d'un sous-système multimédia IP (IMS) (10) d'un réseau de communication (1) lorsqu'il est exécuté par un processeur du dispositif informatique.
